# EUROPEAN PATENT APPLICATION

(11) **EP 4 571 508 A1**
(43) Date of publication of application: **18.06.2025**
(21) Application number: 23217184.3
(22) Date of filing: 15.12.2023
(51) Int. Cl.: G06F 9/50, G06N 3/04, G06N 3/09, G06N 3/096

(54) **METHOD AND SYSTEM FOR DEPLOYING A COMPUTING TASK TO A DISTRIBUTED COMPUTING SYSTEM**

(71) Applicant: Siemens Aktiengesellschaft, 80333 München (DE)
(72) Inventor: Bröring, Arne, 81735 München (DE); Buschmann, Philippe, 85386 Eching (DE)
(74) Representative: Siemens Patent Attorneys

(57) **Abstract**

A computer-implemented method for deploying a computing task (1) to a distributed computing system (200) comprising a plurality of computing devices (201-207) comprises: acquiring (S10) a task description (3) of the computing task (1); using a neural network device (111) to predict predicted resource requirements (4) of the computing task (1); allocating the computing task (1) to a selected one of the plurality of computing devices (201-207) based on the predicted resource requirements (4); and deploying the computing task (1) to the selected computing device (201).

The method allows solving a task allocation problem for the distributed computing system such that power consumption, latency, and the like are further optimized.

## Description

The present invention relates to the field of distributed computing environments, and, more particularly, to a method and system for deploying a computing task to a distributed computing system comprising a plurality of computing devices.

In a distributed computing system comprising a plurality of networked computing devices, a plurality of computing tasks, such as a microservices, containerized environments, or applications, may be freely distributed over (may be orchestrated on) the plurality of computing devices. Through collective action of the individual computing tasks installed on the various computing devices that are interconnected by a network, a higher-order task such as an industrial control task or any other distributed computing task may be carried out.

A computing task has certain resource requirements, such as CPU, memory, storage and bandwidth requirements. Different computing devices of the distributed computing system may provide different amounts of available computing resources. The amount of available computing resources on a computing device decreases with the number of computing tasks executing on the computing device in parallel. If one of the computing devices experiences an overload situation, latency and/or energy consumption of the overall system may increase in a nonlinear manner.

It is therefore desired to solve a so-called task allocation problem, which is a problem of allocating a plurality of computing tasks to the plurality of computing devices in such a manner that an objective function is optimized. For example, it is desired to minimize overall energy consumption and/or latency in the distributed computing system during its operation.

Specifically, it is desired to allocate computing tasks to computing devices in consideration of the available computing resources and other capabilities and constraints of each computing device as well as the resource requirements of the respective computing task. However, in a real-world scenario, the exact resource requirements for each computing task are not known exactly in advance.

Known solutions get around this problem by using a reactive approach. Resource requirements of the computing tasks are monitored on the fly. If a computing device experiences overload, a computing task executing on the overloaded computing device is re-orchestrated, i.e. moved to a different computing device. Examples are given in citations [1] and [2] (citations are listed at the end of the present specification). Re-orchestration, however, causes unwanted effort and delays.

Another approach is to use pre-defined static resource requirements, which are typically specified by a developer of the computing task. Methods for allocating tasks to computing devices of a distributed computing systems based on their pre-defined static resource requirements are given e.g. in [3] and [4]. Furthermore, a multiple workflow offloading strategy based on deep reinforcement learning in mobile edge computing with the goal of minimizing the overall completion time of multiple workflows and the overall energy consumption of multiple user equipment's is disclosed in [5]. Citation [6] provides a Balance Time Scheduling algorithm which estimates the minimum number of computing devices required to execute task-based workflows within a user-specified completion time. [7] also discloses a technique for estimating a best one of numerous resource configurations. A problem in all these approaches is that it is not possible to accurately define the resource requirements of each computing task in advance in a real-life scenario. Therefore, either the pre-defined static resource requirements include a large safety margin, leading to a certain waste of resources that will be allocated, but not used, or the safety margin is set too low, thus potentially causing overload situations when the safety margin is exceeded.

It is one object of the present invention to provide an improved method and system for deploying a computing task to a distributed computing system.

Accordingly, a computer-implemented method for deploying a computing task to a distributed computing system comprising a plurality of computing devices is proposed. The method comprises: a) acquiring a task description of the computing task; b) using a neural network device to predict predicted resource requirements of the computing task; c) allocating the computing task to a selected one of the plurality of computing devices based on the predicted resource requirements; and d) deploying the computing task to the selected computing device.

The inventors have found that a neural network device can be trained to predict resource requirements of a computing task that can be used for solving the task allocation problem in a more accurate manner than using static pre-defined resource requirements specified by a developer or the like.

Consequently, it is advantageously possible to solve the task allocation problem more optimally such that power consumption, latency, and the like are minimized further in the distributed computing system.

In particular, the plurality of computing devices is connected by a network. The plurality of computing devices may comprise stationary devices, such as personal computers, workstations, industrial PCs or industrial controllers. The plurality of computing devices may also comprise mobile edge devices such as smartphones and the like. Each computing device may be suitable for executing one or more computing tasks thereon in parallel.

In particular, the computing task is a microservice, a containerized environment or an application. The computing task may be, for example, a Kubernetes application, container or pod, or may be a Docker container.

In particular, the task description is a file that describes the computing task and that contains information that is necessary and sufficient for an orchestrator to automatically deploy the computing task to one of the computing devices. Examples of a task description include a Kubernetes deployment configuration, such as a Helm-Chart; a Docker file; and the like. The task description may or may not specify static pre-defined resource requirements as proposed by a developer of the computing task.

In step a) the task description is acquired, for example, from a development device, from a service repository, from a human developer or from an automated service or the like.

Step b), in particular, involves inputting the task description and/or a transformed representation of the task description as input into an input layer of a neural network, and obtaining the predicted resource requirements as an output of an output layer of the neural network.

That is, in particular, the neural network device comprises a neural network that is trained to predict resource requirements of a computing task based on a task description of the computing task.

The neural network of the neural network device may have been subjected to training prior to use in the proposed method. That is, the neural network device may be a trained neural network device. However, this does not constitute a limitation, and later-disclosed embodiments also allow the proposed method to be implemented starting out with an untrained neural network and to train the neural network "on the fly", gradually improving the predictions and correspondingly gradually improving the task allocations.

The resource requirements may comprise, for example, one or more of CPU, memory, storage, and/or bandwidth resource requirements that are predicted to occur when the computing task will be executed.

Allocating the computing task, in particular, refers to selecting one of the pluralities of computing devices as a computing device on which the computing task is going to be deployed and executed. Any of the known allocation techniques, e.g. from literature [1] to [7], may be used to perform the allocation, with the modification that these techniques shall operate using the predicted resource requirements predicted by the neural network device of the proposed solution.

Deploying may comprise, particularly, one or more of: obtaining a binary image comprising binary code of the computing task from a source that may be specified in the task description, transferring the binary image to the selected computing device, optionally performing further configurations on the selected computing device according to specifications contained in the task description, and launching the computing task, i.e. causing the binary image of the computing task to be executed by the allocated computing device.

Particularly, the expression "selected computing device" refers to the computing device to which the computing task has been allocated.

Steps c) and d) may be performed, merely as an example, by a Kubernetes orchestrator that is given the predicted resource requirements to use for solving the task allocation problem.

According to an embodiment, the predicted resource requirements that are output by the neural network device in step b) comprise a time-series of predicted required resource values over an execution time of the computing task.

With sufficient prior training, the neural network device is advantageously able to predict not only maximum resource requirements for the entire execution time of the computing task but may be able to predict a time series comprising a plurality of resource requirement values for a plurality of points in times throughout the entire execution time of the computing task. This allows for an even more fine-granular, better optimized allocation of a plurality of computing tasks.

The "execution time" of the computing task may refer to an entire executing time ranging from start to end of execution of the computing task. If the computing task is a computing task that runs in cycles for an indefinite amount of time, the "execution time" may also refer to the time of one or more of the cycles of execution of the computing task.

According to a further embodiment, the task description is a text-based file comprising a number of key-value pairs specifying at least a binary image of the computing task, and step b) comprises transforming the text-based task description into an array of numbers that is input to the neural network device.

Accordingly, the task description may be brought into a shape, that is the shape of an array of numbers, that can be readily processed by an input layer of a neural network of the neural network device.

The transforming may comprise, in particular, one of: mapping each letter in the task description file to its corresponding ASCII number and, optionally, padding the resulting sequence of ASCII numbers up to a predetermined maximum length; filtering the task description file for specific keys and mapping only the letters of the corresponding values to their corresponding ASCII numbers, and generating a multi-dimensional array comprising one padded sequence of ASCII numbers for each value or a one-dimensional array comprising a padded concatenation of sequences of ASCII numbers; filtering the task description file for specific keys and mapping the corresponding values to numeric values based on a vocabulary map.

According to a further embodiment, the allocating step c) comprises optimizing an objective function that is dependent on respective predicted resource requirements of a plurality of computing tasks.

Optimizing an objective function may comprise, for example, minimizing a power consumption, minimizing a latency or the like of the overall distributed computing system.

That is, a plurality of task descriptions of a plurality of computing tasks may be each subjected to steps a) and b) to obtain a plurality of predicted resource requirements, and any one of the known solutions, such as the built-in orchestrator of Kubernetes, or any solution from citations [1] to [7], may then be used to solve the task allocation problem of allocating a plurality of computing tasks to a plurality of computing devices based on the plurality of predicted resource requirements.

According to a further embodiment, the method further comprises e) monitoring actual resource requirements of the computing task during execution of the computing task on the selected computing device; and f) performing supervised training of the neural network device using the task description and the actual resource requirements of the computing task as training data.

In particularly, the supervised training is performed using task descriptions of one or more computing tasks that are executing on the distributed computing system as training input data and using monitored actual resource requirements of the corresponding computing tasks as training output data.

That is, the predictions of the neural network device when first used in a given distributed computing system may be poor. In the present embodiment, when first used, the neural network device may even be an untrained neural network device, the neurons of which have been initialized at random. Alternatively, the neural network device may be a pretrained network device that has been pre-trained with training data obtained from simulations, from the distributed computing system during trial operation, or the like.

At the onset, the predictions of such an untrained or pretrained neural network device may be poor, leading to a poor task allocation that necessitates the use of reactive measures, like re-orchestration, to address a situation when the actual resource requirements of the computing tasks exceed or stay below the poorly predicted resource requirements.

It is therefore desired to increase the accuracy of the predictions made by such an untrained or pretrained neural network device. This can be done by performing supervised training of the neural network device with resource requirements that are being monitored in the actual distributed computing system in which the neural network device is being employed (also called "actual resource requirements" herein). As such, the accuracy of the predictions made by the neural network device may advantageously improve greatly over time. Correspondingly, fulfillment of an objective, such as minimization of energy consumption or latency, may improve greatly over time.

According to a further embodiment, the actual resource requirements are monitored as a time series of actually required resources over an execution time of the computing task.

Thus, by using monitored time series of actually required resources and the corresponding task description as training data, the neural network may advantageously acquire the ability to predict not only one resource requirement value for each resource, but an entire time series of resource requirements, allowing for a more fine-grained allocation of computing tasks to individual computing devices.

According to a further embodiment, the supervised training is performed without human intervention.

That is, as described above, there is advantageously no need to human-engineer training data for the neural network device. Monitored time-series of resource requirements of a computing task as training output data and corresponding task description of the computing task can be used as training data for supervised training of the neural network device and constitute highly relevant training data, because such training data reflects the specific situation in the computing network and the habits of the developers working with said computing network on which the neural network is being applied.

According to a further embodiment, the neural network device comprises a deep neural network.

In particular, a deep neural network comprises a plurality of layers. Each layer comprises a plurality of neurons. The neurons of the layers are interconnected. Preferably, the deep neural network is a fully connected deep neural network in which an input of each neuron in a given layer is connected with all neurons of the preceding layer, and an output of each neuron in the given layer is connected with all neurons of the following layer.

The inventors have found that a deep neural network has proven to be well-suited for predicting resource requirements, or time-series of resource requirements, based on task descriptions of computing task.

According to a further embodiment, the deep neural network comprises an input layer, a number of hidden layers, and an output layer, and the plurality of layers are arranged in an hour-glass shape.

Particularly, an hourglass shaped deep neural network may comprise a first sequence of hidden layers arranged after the input layer with subsequently decreasing number of neurons and a second sequence of hidden layers arranged after the first sequence of hidden layers with subsequently increasing numbers of neurons.

The hour-class shaped deep neural network first performs a dimensionality reduction of the input data and then performs a prediction based on the dimensionality-reduced input data.

Such an hourglass shaped deep neural network has shown to be advantageously particularly well-suited for predicting resource requirements of computing tasks based on their task descriptions.

Any embodiment of the first aspect may be combined with any embodiment of the first aspect to obtain another embodiment of the first aspect.

According to a second aspect, the invention relates to a computer program product comprising a program code for executing the above-described method for deploying a computing task to a distributed computing system when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

According to a third aspect, the invention relates to a system for deploying a computing task to a distributed computing system comprising a plurality of computing devices, the deployment system comprising a resource estimator device and an orchestrator device. The resource estimator device is configured to acquire a task description of the computing task; use a neural network device to predict predicted resource requirements of the computing task; and provide the task description and the predicted resource requirements to the orchestrator device. The orchestrator device is configured to allocate the computing task to a selected one of the plurality of computing devices based on the predicted resource requirements; and deploy the computing task to the selected computing device.

The respective entity, e.g. the neural network device, the orchestrator device and the resource estimator device, may be implemented in hardware and/or in software. If said entity is implemented in hardware, it may be embodied as a device, e.g. as a computer or as a processor or as a part of a system, e.g. a computer system. If said entity is implemented in software it may be embodied as a computer program product, as a function, as a routine, as a program code or as an executable object.

More particularly, the resource estimator device may comprise the neural network device. However, the neural network device may also be a separate device that is external to the resource estimator device and is connected to and can be used by the resource estimator device.

The embodiments and features described with reference to the method of the present invention apply mutatis mutandis to the system of the present invention.

Particularly, the system may further comprise a monitoring de-vice. The monitoring device may be configured to monitor actual resource requirements of the computing task during execution of the computing task on the selected computing device; and to provide the monitored actual requirements of the computing task to the resource estimator device. The resource estimator device may be further configured to perform further training of the neural network device using the task description and the actual resource requirements of the computing task as training data.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 conceptually illustrates a deployment system and a distributed computing system according to exemplary embodiments;
Fig. 2 visualizes steps of a deployment method according to a first exemplary embodiment.
Fig. 3 visualizes use of a neural network according to exemplary embodiments;
Fig. 4 visualizes the structure of a neural network according to exemplary embodiments;
Fig. 5 visualizes the training of a neural network according to exemplary embodiments; and
Fig. 6 visualizes steps of a method according to a second exemplary embodiment.

In the Figures, like reference numerals designate like or functionally equivalent elements, unless otherwise indicated.

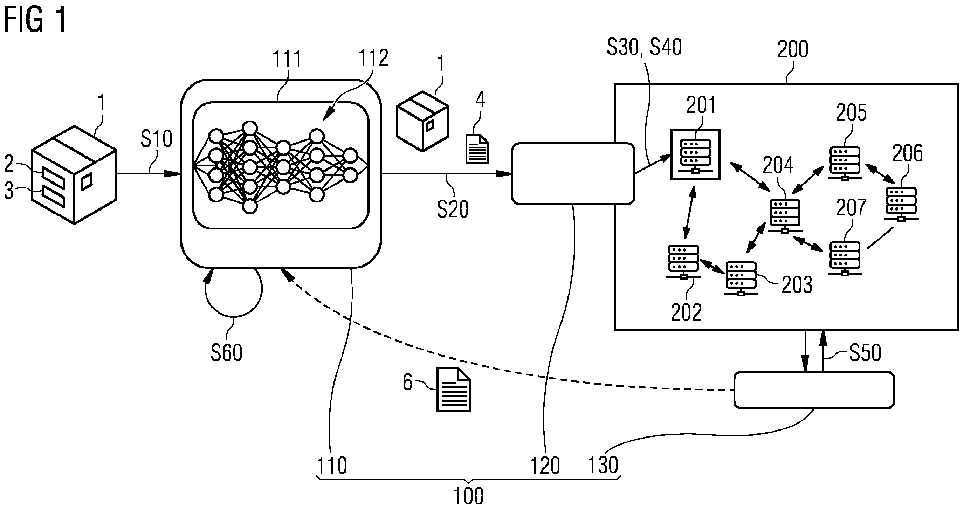

Fig. 1 conceptually illustrates a deployment system 100 and a distributed computing system 200 according to exemplary embodiments.

The distributing computing system 100 comprises a plurality of computing devices 201-207 that are interconnected by a network. The deployment system 100 comprises a resource estimator device 110, an orchestrator device 120, and may, optionally, also comprise a monitoring device 130. Each of the resource estimator device 110, the orchestrator device 120 and the monitoring device 130 may each be either a part of the distributed computing system 200 or may be a device that is external to the distributed computing system 200 and is communicatively connected with the distributed computing system 200.

More particularly, the resource estimator device 110 comprises a neural network device 111, which comprises and/or embodies a neural network 112.

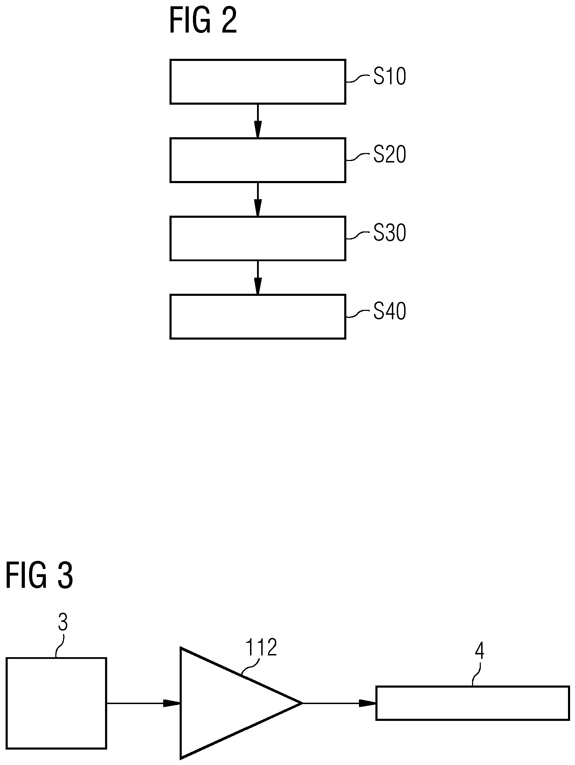

Fig. 2 visualizes steps of a method according to a first exemplary embodiment. Reference will be made to Fig. 1 and Fig. 2.

It is noted that the monitoring device 130 is optional and is not used in the first exemplary embodiment.

In the first exemplary embodiment, the neural network 112 of the neural network device 111 is a pre-trained neural network.

In Step S10, the resource estimator device 110 acquires a computing task 1 that comprises a binary image 2 and a task description 3. The task description 3 is a text-based file that comprises configuration data such as the name and/or a storage location of the binary image 2, version information, networking and other configuration requirements and the like that is necessary and sufficient to deploy the binary image 2 on one of the computing devices 201-207 of the distributed computing system 200. The task description 3 may be, for example, a Docker file, and the binary image 2 may be the image referenced by and/or contained in the Docker file 3.

In Step S20, the resource estimator device 110 uses the neural network device 111 to predict predicted resource requirements 4 of the computing task 1 and provides the computing task 1 (at least the task description 3 thereof) and the predicted resource requirements 4 to the orchestrator device 120.

Fig. 3 visualizes how the resource estimator device 110 (Fig. 1) uses the neural network 112 of the neural network device 111 (Fig. 1) in step S20 (Fig. 2). That is, the task description 3 or a transformed representation thereof is input to the neural network 112 of the neural network device 111 (Fig. 1), and the neural network outputs predicted resource requirements 4.

The neural network 112 may have any suitable structure. The neural network 112 is preferably a deep neural network. The general concept of deep neural networks is described in citation [9].

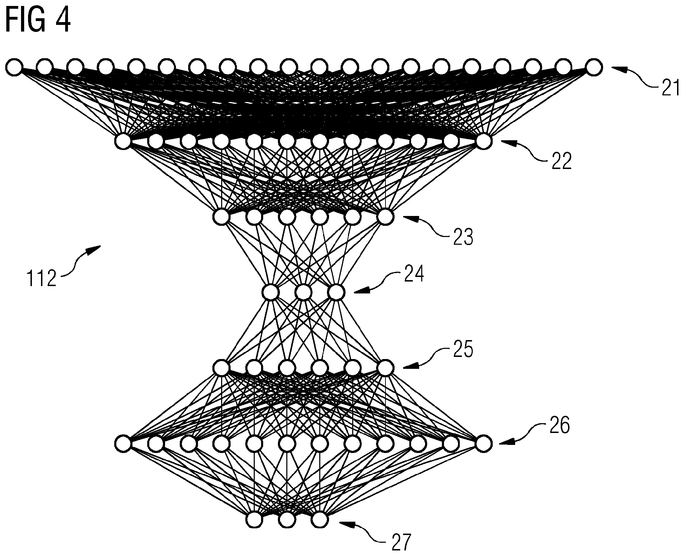

Fig. 4 visualizes one preferred example of the structure of a neural network 112.

The neural network 112 of the preferred example is a deep neural network and comprises an input layer 21 consisting of a plurality of neurons (visualized as circles), a plurality of hidden layers 22-26 consisting each of a plurality of neurons, and an output layer 27 consisting of one or more neurons. The neural network 112 is a fully interconnected neural network, that is, each neuron of each layer 21-27 is connected with each neuron of the preceding layer and with each neuron of the next layer 21-27 (neuron connections are visualized by lines in Fig. 4). Each neuron connection is associated with a weight that can be changed by training the neural network 112. The weight signifies the strength and direction of the influence of one neuron on another neuron. When an input signal that is input at the input layer 21 passes through the neural network 112, it gets multiplied by these weights, which cumulatively determine the final output of the network at the output layer 27. For further details, see citation [9].

Now, the format of the input and the output to the neural network 112 will be described with reference to Fig. 3 and Fig. 4.

Each neuron of the input layer 21 accepts a numerical value as an input. As such, the neural network 112 accepts single- or multi-dimensional numerical arrays of numerical values as input. A two-dimensional numerical array can be input to the one-dimensional input layer 21 by concatenating each row of the two-dimensional numerical array to each other. The same holds for higher-dimensional numerical arrays.

Likewise, the output layer 27 produces one or more numerical values, i.e. a single- or multidimensional numerical array, as output.

Among other possible variants, the following non-limiting preferred variants for transforming the task description 3 into an array of numerical values to be input to the input layer 21 of the neural network 112 are conceived:
As one variant, each letter in the text-based file that constitutes the task description 3 may be mapped to its corresponding ASIIC number, and the resulting ASCII numbers are used as input for the neural network 112. For example, the word "test" would be mapped to the array of the four numbers "116, 101, 115, 116". Since the number of neurons of the input layer 21 of the neural network 112 is fixed, the number of neurons of the input layer 21 of the neural network 112 is set such that it can consume the largest to-be-expected task description 3. If the task description 3 is shorter in characters than the number of neurons of the input layer 21 of the neural network 112, the array may be padded at the end with zeros.

As a second variant, it is assumed that the text-based file constituting the task description 3 comprises a number of key-value pairs, such as "image: <application image>") (wherein "image" is a key" and "application image" is a corresponding value). Such a task description 3 may be filtered according to a predetermined filter criterion. Only the values of those key-value pairs that have keys that match the filter criterion may be converted into corresponding ASCII numbers. This transformation may result in a single padded input similar to the first variant described above. Alternatively, it may result in a multi-dimensional array in which, for example, each row comprises the result of transforming and padding a single one of the values of the matching key-value pairs.

As a third variant, that is based on the filtering concept of the second variant, it is conceived not to transform each value of a matching key into an array of ASCII numbers, but to use a vocabulary map, such that each possible value string for each key is always mapped to a same numerical value. For example, the string "application_image_1" is mapped to the numerical value "1", the string "application_image_2" is mapped to the numerical value "2", and so on. This may result in a considerably smaller input for the input layer 21, may reduce the required size of the neural network 112, and may obviate the need for ASCII conversion and padding. Padding may still be used if, for example, different task descriptions 3 comprise different numbers of key-value pairs that match the filter criterion.

As to the output of the neural network 112, according to one variant, the output layer 27 of the neural network 112 outputs an array comprising one or more numerical values, each of the numerical values being representative of a predicted resource requirement of the computing task, such as a CPU time requirement, a memory requirement, a storage requirement, a network bandwidth requirement, or the like. The respective predicted resource requirement may be a predicted average resource requirement or a predicted maximum resource requirement.

According to another, preferred, variant, the output layer 27 of the neural network 112 outputs a multidimensional array comprising, for each of the requirement categories, such as CPU, memory, storage and network, a time series comprising a respective predicted momentary resource requirement for a plurality of timestamps distributed over the projected runtime of the computing task 1 (Fig. 1). One of many possible examples of such a time series that could be output by the output layer 27 of the neural network 112 is given in the below table:

| timestamp | t=1 | t=2 | t=2 | t=3 | t=4 | t=5 | t=6 | ... | t=n |
|---|---|---|---|---|---|---|---|---|---|
| CPU | 0.10 | 0.12 | 0.15 | 0.22 | 0.40 | 0.41 | 0.42 | | 0.21 |
| memory | 120 | 150 | 170 | 180 | 260 | 250 | 240 | | 400 |
| storage | 1,10 | 1,15 | 1,17 | 1,18 | 1,19 | 1,19 | 1,19 | | 1,51 |

Herein, the "CPU" resource requirement may represent a required share of the CPU's computing time (1.00 representing full or exclusive use of the CPU), the "memory" resource requirement may represent required memory in Megabytes, the "storage" resource requirement may represent required local storage in Gigabytes, and the like. The timestamps may be comprised in the output of the neural network 112, or, if a constant time step between values is agreed on in advance, may not be comprised in the output of the neural network 112 and may be implicit.

It will be appreciated that even though the above table shows a two-dimensional array as output of the output layer 27, the output layer 27 may actually output the rows of the table concatenated one after another.

In the first exemplary embodiment, the neural network 112 is a pre-trained neural network that has already acquired the capability to predict resource requirements 4 based on task descriptions 3 sufficiently good so that the results are useful and beneficial for improving the efficiency of task allocation in the distributed computing system 200.

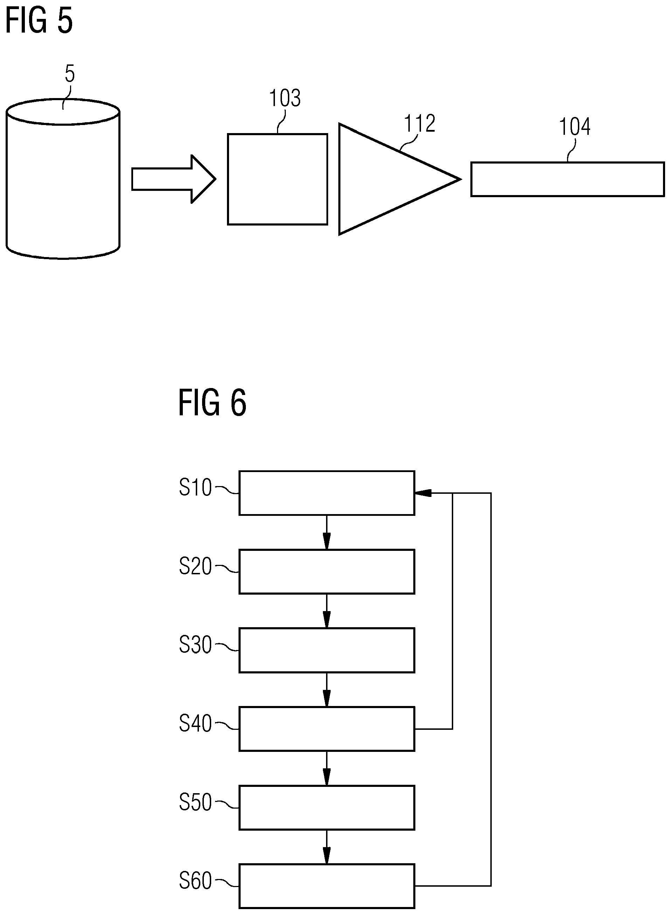

Fig. 5 visualizes how training of the neural network 112 can be performed to let it acquire said capability. That is, a database 5 is prepared that comprises a plurality of task descriptions and associated resource requirements that have been measured previously. The task descriptions and associated measured resource requirements may be sourced from the already operating distributed computing system 200, or form other distributed computing systems, project installments and the like.

During training, for each pair of task description and associated resource requirements, the task description is provided to the input layer 21 of the neural network 112 as training input data 103, and the corresponding resource requirements that were measured are provided to the neural network 112 as training output data 104, and a learning algorithm is performed that adjusts weights of the neuron connections between the layers 21-27 of the neural network 112 so as to minimize an error between the training output data 104 and an actual output of the output layer 27 of the neural network 112 in response to the training input data 103 being provided to the input layer 21. This type of training is called "supervised training", because during such training, the neural network 112 is calibrated to reproduce training output data 104 as good as possible.

However, said supervised training may be performed without human interaction, because the task descriptions of computing task in a distributed computing system (200 or other) may be acquired automatically from a central repository or the like, and the corresponding resource requirements may be observed and measured on the distributed computing system (200 or other) automatically. That is, training data comprising a plurality of datasets with training input data 103 and associated training output data 104 may be generated automatically, and the learning algorithm may also be performed automatically.

That is, in the first exemplary embodiment, the neural network 112 has been pre-trained using task descriptions and measured resource requirements obtained from the same distributed computing system 200 (Fig. 1).

It will be appreciated that the training input data 103 preferably has the same structure (transformed representation, such as a single padded ASCII code sequence, a multi-dimensional array of padded ASCII code sequences, strings or a plurality of numerical values obtained using a vocabulary map) that was described for the input of the neural network 112 for step S20 above, and the training output data 104 preferably has the same structure (a plurality of numerical values indicating average or maximum resource requirement of a respective category, or a timeseries comprising a plurality of numerical values for each category over an execution time of the computing task) that was described for the output of the neural network 112 for step S20 above.

Returning now to the description of the flow in Fig. 2, reference will be made to Fig. 1 and Fig. 2.

As final sub-step of step S20, the predicted resource requirements 4 of the computing task 1 obtained as described hereinabove are provided to the orchestrator device 120.

In step S30, the orchestrator device 120 allocates the computing task 1 to a selected one of the plurality of computing devices 201-207 based on the predicted resource requirements 4. That is the orchestrator device 120 solves a task allocation problem of how to allocate each computing task out of a plurality of computing tasks comprising the computing task 1 as well as further computing tasks 1 that are provided to the orchestrator device 120 in further iterations of steps S10, S20 and/or further computing tasks that are already orchestrated in the distributed computing system 200, to a respective selected one computing device 201-207 such that an objective function is optimized. In particular, the objective function may relate to one of latency and power usage. Herein, the orchestrator device 120 considers the predicted resource requirements 4 of each of the computing task 1 when optimizing the objective function. That is, merely as an example, a computing task 1 that is predicted to generate a high CPU load may be allocated to a computing device 201-207 on which CPU power is cheaper (requires less energy, is more readily available etc.). A computing task that is predicted to use few storages may be allocated to a computing device 201-207 that is equipped with a fast SSD, whereas a computing task 1 generating a very high storage requirement may be allocated to a computing device 201-207 that is equipped with a large HDD, and so on. Herein, the orchestrator device 120 may use the predicted resource requirements 4 of each computing task 1 to make sure that no overload situation occurs on any of computing devices 201-207. That is, the orchestrator device 120 performs a proactive task allocation, which, thanks to the predictions made by the neural network device 111, may be more optimized (cause less re-orchestration effort during runtime, consume less energy, have lower latency e.g.) than a proactive task allocation that is performed based on human-specified predefined static resource requirements.

In the variant in which the predicted resource requirements 4 comprise a time-series of resource requirements, the orchestrator device 120 may, for example, allocate a task that causes a high CPU load only in the first three minutes of execution, and a task that causes a high CPU load only after more than three minutes of execution, to a same computing device 201-207 even if the maximum peak CPU loads of each of the computing tasks 1 exceed the available CPU power of the selected computing device 201-207, leveraging the predicted knowledge that peak CPU loads in each of the computing tasks will not occur concurrently. That is, more generally speaking, in the variant of the first exemplary embodiment in which the predicted resource requirements comprise time-series of resource requirement values, the orchestrator device 120 is provided with predicted knowledge that allows it to perform the task allocation in an even more finely grained manner, resulting in even better leverage of the available resources of the computing devices 201-207 while at the same time avoiding overload situations.

In step S40, the orchestrator device 120 deploys the computing task 1 to the computing device 201-207 to which it has been allocated in step S30 (to the selected computing device 201-207). That is, for each task 1, the orchestrator device 120 uploads the corresponding binary image 2 to the respective selected computing device 201-207, performs configurations on the selected computing device 201-207 according to information from the respective task description 3, and causes the respective selected computing device 201-207 to execute the binary image 2 of the respective computing task 1.

Thanks to the improved predicted resource requirements 4, the task allocation produced in this way is optimized, and the distributed computing system 200 executing a plurality of computing tasks 1 allocated to a plurality of computing devices 201-207 may advantageously operate in an optimized manner, e.g. may consume less energy, may operate with reduced latency, and/or may require fewer re-orchestration operations during runtime or may not need any re-orchestration operations during runtime at all.

Fig. 6 visualizes steps of a method according to a second exemplary embodiment. The second exemplary embodiment is based on the first exemplary embodiment, and the description focuses on the differences. Reference will be made to Fig. 1, Fig. 5 and Fig. 6.

The second exemplary embodiment differs from the first exemplary embodiment in that, at the onset of operation of the distributed computing system 200 (Fig. 1), the neural network 112 (Fig. 1, Fig. 5) is either untrained, or is not sufficiently pre-trained, as will be described below for a preferred example.

That is, the case of a not sufficiently pre-trained neural network 112 may be a case in which the neural network 112 has been pre-trained using task descriptions and measured resource requirements obtained from a different distributed computing system, from a simulation of the distributed computing system 200 lnr the like. The task descriptions used as training data may be the same or similar to the task descriptions 3 that will occur in the distributed computing system 200. However, the resource requirements that were measured on the simulation or the different distributed computing system that are used as training output data during the supervised pre-training may differ from the resources that will actually be required by the corresponding computing tasks when executing on the distributed computing system 200 under its specific operating conditions. Such a pre-trained neural network 112 may have acquired, during pre-training, the ability to recognize patterns in the input task descriptions 3 but may still not have the capability to predict the resource requirements 4 for the specific distributed computing system 200 sufficiently well.

That is, the capability of the untrained or insufficiently trained neural network 112 to correctly predict the predicted resource requirements 4 may be low initially.

According to the second embodiment, steps S10 to S40 are performed in a loop for each of a plurality of task descriptions 3 of computing tasks 1 that are to be deployed on the distributed computing system 200. Steps S10 to S40 are the same as in the first exemplary embodiment, and their description will not be repeated. However, due to the yet-limited capabilities of the neural network device 111, the initial task allocation arrived at in this way will be sub-optimal. Correspondingly, a large number of reactive re-orchestrations may be necessary to reach a state in which the distributed computing system 200 operates without overload situations.

Then, during live operation of the plurality of computing tasks 1 on the plurality of computing devices 201-207 of the distributed computing system 200, steps S50 and S60 are performed.

In step S50, the monitoring device 130 monitors and stores the actual resource requirements 6 of each computing task 1 experienced while the plurality of computing tasks 1 are being executed on the plurality of computing devices 201-207 of the distributed computing system 200.

In a particularly preferred variant, the monitoring device 130 monitors and stores the actual resource requirements 6 for each computing task 1 as a time series of actually required resource values over an entire execution time (or an execution time of one or of a plurality of execution cycles of) the respective computing task 1.

Then, the monitoring device 130 provides the stored actual resource requirements 6 back to the resource estimator device 110.

In step S60, the resource estimator device 110 performs supervised training of the neural network 112 of the neural network device 111 using, as training input data 103 (Fig. 5), the task descriptions 3 of the computing tasks 1 that were being executed on the distributed computing system 200, and, as training output data 104 (Fig. 5), the measured actual resource requirements 6 of these computing tasks 1 that were received from the monitoring device 130.

According to a preferred example, the neural network 112 of the second exemplary embodiment has the hour-glass shape shown in Fig. 4. The hour-glass shape somewhat resembles the auto-encoder discussed in citation [11] but differs from it in that it does not have the same input and output dimensionality of the layers. A first portion of layers 21, 22, 23, 24 have subsequently decreasing numbers of neurons and serve to derive relevant hidden features from the raw input that is provided at the input layer 21. It can be said that the hidden layers 22, 23, 24 comprise increasingly compressed representations of the original input to the input layer 21, see also citation [11] (so-called "dimensionality reduction"). A second portion of layers 24, 25, 26 have subsequently increasing numbers of neurons and serve to predict the resource requirements 4 based on the hidden features (compressed representations) derived by the layers 21, 22, 23, 24.

As such, the hour-glass shape of the neural network 112 advantageously lends itself to transfer learning.

That is, in the preferred example, the supervised training of step S60 may constitute transfer learning, see also citation [10]. During transfer learning, the pre-trained neural network 112 that already had learnt the capability to predict resource requirements for a simulated distributed computing environment, for a different distributed computing environment or the like, is reused and gradually acquires a new capability, i.e. of correctly predicting resource requirements 4 in the specific distributed computing system 200 under its specific operating conditions.

After step S60, the method loops back to step S10 as and when a further computing task 1 is to be deployed on the distributed computing system 100 and/or to step S50 as and when further actual resource requirements 6 can be monitored and used for further supervised training.

That is, with the proposed method of the second exemplary embodiment, advantageously, an untrained or an insufficiently pre-trained neural network device 111 can be used initially, and the neural network device can continuously acquire and improve its neural network's 112 capability of correctly predicting the resource requirements 4 over time during life operation of the distributed computing system 200 until a point is reached at which the task allocations made by the orchestration device 120 are better optimized than task allocations that would conventionally be made if using static pre-defined resource requirements.

Although the present invention has been described in accordance with preferred embodiments, it is obvious for the person skilled in the art that modifications are possible in all embodiments.

It is noted that that in Fig. 1 and the related descriptions, the resource estimator device 112 acquires the computing task 1 as a package comprising both the task description 3 and the binary image 2 of the computing task 1. This is not a necessary configuration, and the resource estimator device 112 also may merely acquire the task description 3, which may contain a link to a database or repository from which the binary image 2 may be fetched. For deployment in step S40, the orchestrator device 120 may fetch the binary image 2 from the database or repository specified in the task description 3 or may instruct the selected computing device 201-207 to fetch the binary image 2 from the link to the database or repository.

A single resource estimator device 110 with a single neural network device 111 and a single neural network 112 has been described. However, it is conceivable to use multiple resource estimator devices 110 that can be trained individually at first and sporadically synchronize their trained neural networks 112 with each other by using the concept of federated learning. In federated learning, all neural networks 112 and their weights are averaged, which leads to one same model for every neural network 112, see also citation [12].

The multiple resource estimator devices 110 may all be used with the same distributed computing system 200 to provide redundance. If one resource estimator device 110 is unresponsive due to hardware failure or sudden high load, a fallback to one of the other resource estimator devices 110 can be performed.

Different resource estimator devices 110 may also be used with different distributed computing systems 200 and use federated learning to improve their prediction performance by leveraging cross-system knowledge. Optionally, privacy-preserving techniques may be used to safeguard sensitive data in such a multi-system setting.

The neural network structure shown in Fig. 4 is merely an example. The neural network 112 may have few or more neurons per layer, may have few or more layers, and may or may not have the hour-glass shape, and may or may not be a fully interconnected deep neural network. Certain connections may also be omitted. Merely as a further example, the neural network 112 may also comprise a first sequence of hidden layers arranged after the input layer with subsequently increasing number of neurons and a second sequence of hidden layers arranged after the first sequence of hidden layers with subsequently decreasing numbers of neurons.

Embodiments of the proposed method use a neural network 112 to predict resource requirements 4 of computing tasks 1 so as to improve and optimize the task allocation in a distributed computing system. The neural network 112 may be pre-trained through supervised learning to kickstart its usefulness in the beginning, may only be pre-trained insufficiently, or may be untrained, i.e. initialized at random. After task allocation has been performed and the computing tasks 2 have been deployed, the operation of the distributed computing system 100 is monitored and supervised training of the neural network 111 is performed to improve its prediction performance.

That is, advantageously, the neural network 112 can be trained or transfer-trained "on the fly" with real-world task descriptions 3 and resource requirements 6 that constitute training data that is captured in a real-world scenario on the specific distributed computing system 200 without the need for simulations, models or human assumptions to create the training data. No human supervision is necessary to train or further train the neural network 112.

Therein, the use of a neural network 112 trained in this manner by the resource estimator device 110 according to embodiments can advantageously provide improved predicted resource requirements 4 which lead to an increased optimality of the task allocation performed by the orchestrator device 120, leading to effects such as reduced latency, reduced power consumption or the like of the distributed computing system 200.

### Citations

[1] O. Skarlat and S. Schulte, "FogFrame: a framework for IoT application execution in the fog," PeerJ Comput. Sci., vol. 7, p. e588, Jul. 2021, doi: 10.7717/peerj-cs.588.
[2] V. Cardellini, V. Grassi, F. Lo Presti, and M. Nardelli, "Optimal operator placement for distributed stream processing applications," in Proceedings of the 10th ACM International Conference on Distributed and Event-based Systems, Irvine California, Jun. 2016, pp. 69-80. doi: 10.1145/2933267.2933312.
[3] J. Seeger, A. Bröring, and G. Carle, "Optimally Self-Healing IoT Choreographies." arXiv, Jul. 10, 2019. Accessed: Jul. 26, 2022. [Online]. Available: http://arxiv.org/abs/1907.04611
[4] P. Buschmann, M. H. M. Shorim, M. Helm, A. Bröring, and G. Carle, "Task Allocation in Industrial Edge Networks with Particle Swarm Optimization and Deep Reinforcement Learning," in Proceedings of the 12th International Conference on the Internet of Things, New York, NY, USA, Jan. 2023, pp. 239-247. doi: 10.1145/3567445.3571114.
[5] Y. Gao and Y. Wang, "Multiple Workflows Offloading Based on Deep Reinforcement Learning in Mobile Edge Computing," in Algorithms and Architectures for Parallel Processing, Cham, 2022, pp. 476-493. doi: 10.1007/978-3-030-95384-3_30.
[6] E.-K. Byun, Y.-S. Kee, J.-S. Kim, E. Deelman, and S. Maeng, "BTS: Resource capacity estimate for time-targeted science workflows," J. Parallel Distrib. Comput., vol. 71, no. 6, pp. 848-862, Jun. 2011, doi: 10.1016/j.jpdc.2011.01.008.
[7] A. Sudarsanam, M. Srinivasan, and S. Panchanathan, "Resource estimation and task scheduling for multithreaded reconfigurable architectures," in Proceedings. Tenth International Conference on Parallel and Distributed Systems, 2004. ICPADS 2004., Jul. 2004, pp. 323-330. doi: 10.1109/ICPADS.2004.1316111.
[8] M. Emre Celebi and Kemal Aydin, Unsupervised Learning Algorithms. Cham: Springer, 2016. [Online]. Available: https://search.ebscohost.com/login.aspx?direct=true&db=nl ebk&AN=1175043&site=ehost-live
[9] G. Montavon, W. Samek, and K.-R. Müller, "Methods for interpreting and understanding deep neural networks," Digit. Signal Process., vol. 73, pp. 1-15, Feb. 2018, doi: 10.1016/j.dsp.2017.10.011.
[10] K. Weiss, T. M. Khoshgoftaar, and D. Wang, "A survey of transfer learning," J. Big Data, vol. 3, no. 1, p. 9, May 2016, doi: 10.1186/s40537-016-0043-6.
[11] S. Madhavan, M. T. J. U. January 24, 2021 | Published September 7, and 2017, "Deep learning architectures," IBM Developer. https://developer.ibm.com/articles/cc-machine-learning-deep-learning-architectures/ (accessed Feb. 17, 2023) .
[12] T. Li, A. K. Sahu, A. Talwalkar, and V. Smith, "Federated Learning: Challenges, Methods, and Future Directions," IEEE Signal Process. Mag., vol. 37, no. 3, pp. 50-60, May 2020, doi: 10.1109/MSP.2020.2975749.

## Claims

1. A computer-implemented method for deploying a computing task (1) to a distributed computing system (200) comprising a plurality of computing devices (201-207), the method comprising:
a) acquiring (S10) a task description (3) of the computing task (1);
b) using a neural network device (111) to predict predicted resource requirements (4) of the computing task (1);
c) allocating the computing task (1) to a selected one of the plurality of computing devices (201-207) based on the predicted resource requirements (4); and
d) deploying the computing task (1) to the selected computing device (201).

2. The method according to claim 1,
wherein the predicted resource requirements (4) that are output by the neural network device (111) in step b) comprise a time-series of predicted required resource values over an execution time of the computing task (1).

3. The method according to claim 1 or 2,
wherein the task description (3) is a text-based file comprising a number of key-value pairs specifying at least a binary image (2) of the computing task, and step b) comprises transforming the text-based task description (3) into an array of numbers that is input to the neural network device (111) .

4. The method according to any one of claims 1 to 3,
wherein the allocating step c) comprises optimizing an objective function that is dependent on respective predicted resource requirements (4) of a plurality of computing tasks (1) .

5. The method of any one of claims 1 to 4,
further comprising:
e) monitoring (S50) actual resource requirements (6) of the computing task (1) during execution of the computing task (1) on the selected computing device (201); and
f) performing (S60) supervised training of the neural network device (111) using the task description (3) and the actual resource requirements (6) of the computing task (1) as training data.

6. The method of claim 5,
wherein the actual resource requirements (6) are monitored as a time series of actually required resources over an execution time of the computing task (1).

7. The method of any one of claims 5 to 6,
wherein the supervised training (S60) is performed without human intervention.

8. The method according to any one of claims 1 to 7,
wherein the neural network device (111) comprises a deep neural network.

9. The method of claim 8,
wherein the deep neural network (112) comprises an input layer (21), a number of hidden layers (22-26), and an output layer (27), and the plurality of layers (21-27) are arranged in an hour-glass shape.

10. A computer program product comprising a program code for executing the method of any one of claims 1 to 9 when run on at least one computer.

11. A system (100) for deploying a computing task (1) to a distributed computing system (200) comprising a plurality of computing devices (201-207), the deployment system (100) comprising a resource estimator device (110) and an orchestrator device (120),
the resource estimator device (110) configured to acquire a task description (3) of the computing task (1); use a neural network device (111) to predict predicted resource requirements (4) of the computing task (1); and provide the task description (3) and the predicted resource requirements (4) to the orchestrator device (120),
the orchestrator device (120) configured to allocate the computing task (1) to a selected one of the plurality of computing devices (201-207) based on the predicted resource requirements (4); and deploy the computing task (1) to the selected computing device (201).

12. The system of claim 11, further comprising a monitoring device (130),
the monitoring device (130) configured to monitor actual resource requirements (6) of the computing task (1) during execution of the computing task (1) on the selected computing device (201); and to provide the monitored actual resource requirements (6) of the computing task (1) to the resource estimator device (110), and
the resource estimator device (110) further configured to perform supervised training of the neural network device (111) using the task description (3) and the actual resource requirements (6) of the computing task (1) as training data.
